# EUROPÄISCHE PATENTSCHRIFT

(11) **EP 1 335 822 B1**
(45) Veröffentlichungstag und Bekanntmachung des Hinweises auf die Patenterteilung: **30.03.2005**
(21) Anmeldenummer: 01982470.5
(22) Anmeldetag: 08.11.2001
(51) Int. Cl.: B29C 45/07, B29C 45/50

(54) **ANTRIEBSVORRICHTUNG ZUM VERSCHIEBEN ZWEIER GERADLINIG BEWEGBARER KOMPONENTEN EINER KUNSTSTOFFSPRITZGIESSMASCHINE**
DRIVE DEVICE FOR DISPLACING TWO LINEARLY MOVEABLE COMPONENTS PERTAINING TO A PLASTIC INJECTION MOULDING MACHINE
DISPOSITIF D'ENTRAINEMENT PERMETTANT LE DEPLACEMENT DE DEUX COMPOSANTS MOBILES LINEAIREMENT D'UNE MACHINE DE MOULAGE PAR INJECTION DE MATIERE PLASTIQUE

(30) Priorität: 14.11.2000 DE 10056404; 27.01.2001 DE 10103681
(43) Veröffentlichungstag der Anmeldung: 20.08.2003
(73) Patentinhaber: Bosch Rexroth AG, 70184 Stuttgart (DE)
(72) Erfinder: DANTLGRABER, Jörg, 97816 Lohr (DE)
(86) Internationale Anmeldenummer: PCT/EP2001/012917
(87) Internationale Veröffentlichungsnummer: WO 2002/040243

(56) Entgegenhaltungen:
- WO-A-02/11969
- US-A- 4 540 359
- PATENT ABSTRACTS OF JAPAN vol. 009, no. 300 (M-433), 27. November 1985 (1985-11-27) -& JP 60 139419 A (FANUC KK), 24. Juli 1985 (1985-07-24)
- PATENT ABSTRACTS OF JAPAN vol. 018, no. 452 (M-1661), 23. August 1994 (1994-08-23) -& JP 06 143372 A (SUMITOMO JUKIKAI PLAST MACH KK;OTHERS: 01), 24. Mai 1994 (1994-05-24)

## Beschreibung

Die Erfindung betrifft eine Antriebsvorrichtung, die zum Verschieben zweier zumindest teilweise zeitlich nacheinander geradlinig bewegbarer Komponenten einer Kunststoffspritzgießmaschine, insbesondere zum Verschieben der Einspritzeinheit für das Anlegen der Einspritzdüse an eine Form und zum Verschieben des Einspritzmechanismus zum Einspritzen von Kunststoff in die Form vorgesehen ist und die Merkmale aus dem Oberbegriff des Patentanspruchs 1 oder aus dem Oberbegriff des Patentanspruchs 2 aufweist.

Eine solche Antriebsvorrichtung ist aus der US-A 4,540,359 bekannt. Dort wird ein elektrischer Rotationsmotor verwendet, um eine Einspritzeinheit einschließlich einer Einspritzdüse an eine Spritzgießform heran- und wieder von der Form wegzufahren, um also die sogenannte Düsenanlagebewegung auszuführen, und um zum Einspritzen von Kunststoff in die Spritzgießform einen Einspritzmechanismus einschließlich einer Plastifizierschnecke axial zu verfahren. Die beiden Bewegungen finden zeitlich völlig getrennt nacheinander statt. Der Elektromotor ist seitlich am Gehäuse der Einspritzeinheit befestigt, wobei seine Achse parallel zur Richtung der Düsenanlage- und der Einspritzbewegung verläuft. Von dem drehenden Elektromotor ist über ein Riemengetriebe zunächst eine drehbar im Gehäuse der Einspritzeinheit gelagerte Welle antreibbar, die durch ein Zahnrad hindurchgeht, das entweder frei bezüglich der Welle drehbar oder über eine elektromagnetisch betätigbare Schaltkupplung mit der Welle koppelbar ist. Das Zahnrad kämmt mit einem weiteren Zahnrad, das verdrehsicher auf einer Gewindespindel befestigt ist, die zusammen mit einer geradlinig geführten Spindelmutter einen Gewindetrieb bildet, über den die rotierende Bewegung des Elektromotors und der nachfolgenden Getriebeglieder in eine geradlinige Bewegung des Einspritzmechanismus umgewandelt wird. Die Zwischenwelle ist über eine zweite elektromagnetisch betätigbare Schaltkupplung mit einer Gewindespindel koppelbar, die mit der Zwischenwelle fluchtet, axial ortsfest am Gehäuse der Einspritzeinheit gehalten ist und mit einer ortsfest am Maschinengestell angeordneten Spindelmutter kämmt.

Um die Einspritzeinheit an die Spritzgießform heranzufahren, ist letztere Schaltkupplung betätigt, während die erste Schaltkupplung unwirksam ist. Somit wird die in Flucht zur Zwischenwelle angeordnete Gewindespindel gedreht und dadurch die Einspritzeinheit an die Spritzgießform herangefahren. Wenn dies geschehen ist, wird eine Blockiereinrichtung betätigt, die eine Rotation der zweiten Gewindespindel relativ zum Gehäuse der Einspritzeinheit verhindert. Die zweite Schaltkupplung wird deaktiviert.

Dann wird die erste Schaltkupplung betätigt und dadurch eine Kraftkette vom Elektromotor zur ersten Gewindespindel und damit zum Einspritzmechanismus geschlossen. Dieser fährt axial nach vorne, wodurch vorher plastifizierter Kunststoff in die Spritzgießform eingespritzt wird.

Nachteilig an der bekannten Antriebsvorrichtung ist, daß die Schaltkupplungen, deren Eingangselement und Ausgangselement relativ zueinander verdrehbar sind, relativ starkem Verschleiß unterworfen sind. Insgesamt ist die bekannte Antriebsvorrichtung recht aufwendig gestaltet und damit auch sehr teuer.

Der Erfindung liegt dementsprechend die Aufgabe zugrunde, eine Antriebsvorrichtung mit den Merkmalen aus dem Oberbegriff des Patentanspruchs 1 bzw. aus dem Oberbegriff des Patentanspruchs 2 so weiterzuentwickeln, daß sie wenig verschleißbehaftet ist und relativ einfach und kostengünstig baut.

Das angestrebte Ziel wird für eine Antriebsvorrichtung mit den Merkmalen aus dem Oberbegriff des Patentanspruchs 1, also mit einem rotierenden Elektromotor, erfindungsgemäß dadurch erreicht, daß gemäß dem kennzeichnenden Teil des Patentanspruchs 1 das mechanische Getriebe zwischen dem Elektromotor und den beiden Schaltkupplungen angeordnet ist, und das geradlinig verfahrbare Ausgangselement des mechanischen Getriebes für das Verschieben der einen bewegbaren Komponente über den zum Verschieben der anderen bewegbaren Komponente notwendigen Weg hinaus verfahrbar ist. Bei einer erfindungsgemäßen Antriebsvorrichtung nach dem Patentanspruch 1 sind somit keine Schaltkupplungen notwendig, deren Eingangselement und Ausgangselement sich relativ zueinander verdrehen und dadurch verschleißen können. Zudem ist nur ein Gewindetrieb bzw. nur ein Zahnstangentrieb notwendig, um beide Komponenten bewegen zu können. Ein Gewindetrieb bzw. ein Zahnstangentrieb ist im allgemeinen recht teuer.

Auf eine zweite Weise wird das angestrebte Ziel dadurch erreicht, daß der Elektromotor ein elektrischer Linearmotor mit einem linear verfahrbaren Ausgangselement ist, dem die beiden Schaltkupplungen in der Kraftkette nachgeordnet sind und das für das Verschieben der einen bewegbaren Komponente über den zum Verschieben der anderen bewegbaren Komponente notwendigen Weg hinaus verfahrbar ist.

Vorteilhafte Ausgestaltungen einer erfindungsgemäßen Antriebsvorrichtung gemäß Patentanspruch 1 oder gemäß Patentanspruch 2 finden sich in den Unteransprüchen 3 bis 11.

Der Weg, um den das Ausgangselement des elektrischen Linearmotors bzw. des dem rotierenden Elektromotor nachgeordneten Gewinde- oder Zahnstangentriebs verfahren werden kann, kann ohne weiteres so groß gemacht werden, daß gemäß Patentanspruch 3 die beiden bewegbaren Komponenten der Kunststoffspritzgießmaschine zeitlich völlig getrennt nacheinander bewegt werden können.

Bevorzugt ist gemäß Patentanspruch 4 in der Kraftkette zwischen dem Ausgangselement und einer verschiebbaren Komponente ein hydraulisches Getriebe mit einer ersten Kolben-Zylinder-Einheit, die einen einen ersten Zylinderraum begrenzenden, ersten Hydraulikzylinder aufweist, und mit einer in der Kraftkette näher an der verschiebbaren Komponente befindlichen zweiten Kolben-Zylinder-Einheit vorhanden, die einen einen zweiten Zylinderraum begrenzenden, zweiten Hydraulikkolben aufweist, wobei der erste.Zylinderraum und der zweite Zylinderraum fluidisch miteinander verbindbar sind. Mit einem solchen hydraulischen Getriebe wird man sehr flexibel im Hinblick auf die Anordnung des Elektromotors, da sich der Abstand zwischen den beiden Kolben-Zylinder-Einheiten ohne weiteres durch hydraulische Leitungen überbrücken läßt. Außerdem kann die Wirkfläche am zweiten Hydraulikkolben leicht größer als am ersten Hydraulikkolben gemacht werden, so daß man eine Kraftübersetzung erhält, und die Belastung der vor dem hydraulischen Getriebe befindlichen Kraftkettenglieder, z.B. die Belastung eines Gewindetriebes, gering gehalten werden kann. Die Kolben-Zylinder-Einheiten sind gemäß Patentanspruch 5 insbesondere doppeltwirkend, so daß die bewegbaren Komponenten von dem Elektromotor in entgegengesetzte Richtungen verschoben werden können. Grundsätzlich ist es denkbar, die Blockiervorrichtung für eine bewegbare Komponente als mechanische, formschlüssige Verriegelung auszubilden. Befindet sich jedoch in einer Kraftkette ein hydraulisches Getriebe, so kann die Blockiervorrichtung auf besonders einfache Weise gemäß Patentanspruch 6 ein Sperrventil sein, durch das der zweite Zylinderraum zum ersten Zylinderraum hin absperrbar ist.

Bei einer Ausbildung gemäß Patentanspruch 8 werden zusammen mit dem hydraulischen Getriebe, dem ersten Gewindetrieb und dem ersten Elektromotor ein zweiter Gewindetrieb und ein zweiter Elektromotor verwendet. Von diesem ist eines der beiden Gewindetriebelemente, die miteinander in Eingriff stehen, drehend antreibbar. Eines der beiden Gewindetriebelemente ist zwischen dem hydraulischen Getriebe und der verschiebbaren Komponente angeordnet. Somit kann zum einen über den Gewindetrieb und zum anderen über das hydraulische Getriebe eine Kraft auf die bewegbare Komponente ausgeübt werden, wobei durch die über das hydraulische Getriebe ausgeübte Kraft die Gewinde und eventuell vorhandene Eingriffskörper des Gewindetriebs nicht belastet werden. Mit dem zusätzlichen Gewindetrieb ist es möglich, das Istwertprofil von Kraft und /oder Geschwindigkeit dem Sollwertprofil, nach dem die verschiebbare Komponente verfahren werden soll, sehr exakt folgen zu lassen, da die mechanische Kraftübertragung steifer als die über das hydraulische Getriebe ist.

Die Schaltkupplungen sind vorzugsweise besonders einfach gemäß Patentanspruch 11 aufgebaut.

Zwei Ausführungsbeispiele einer erfindungsgemäßen Antriebsvorrichtung, mit denen jeweils die Einspritzeinheit (Düsenanlegebewegung) und der Einspritzmechanismus (Einspritzbewegung) einer Kunststoffspritzgießmaschine verschiebbar sind und die einen rotierenden Elektromotor und einen diesem nachgeordneten Gewindetrieb aufweisen, sind in den Zeichnungen dargestellt. Anhand dieser Zeichnungen wird die Erfindung nun näher erläutert.

Es zeigen
- Figur 1: das erste Ausführungsbeispiel, bei dem die Schnecke eines Einspritzmechanismus von einem einzigen Elektromotor über einen Gewindetrieb und ein diesem nachgeordnetes hydraulisches Getriebe verschiebbar ist,
- Figur 2: schematisch einen vollständigen Bewegungsablauf des Gewindetriebes während des Arbeitszyklus einer Kunststoffspritzgießmaschine und
- Figur 3: 3 das zweite Ausführungsbeispiel, bei dem die Schnecke eines Einspritzmechanismus gemeinsam von einem ersten Elektromotor über einen Gewindetrieb und ein diesem nachgeordnetes hydraulisches Getriebe und von einem zweiten Elektromotor über einen zweiten Gewindetrieb verschiebbar ist.

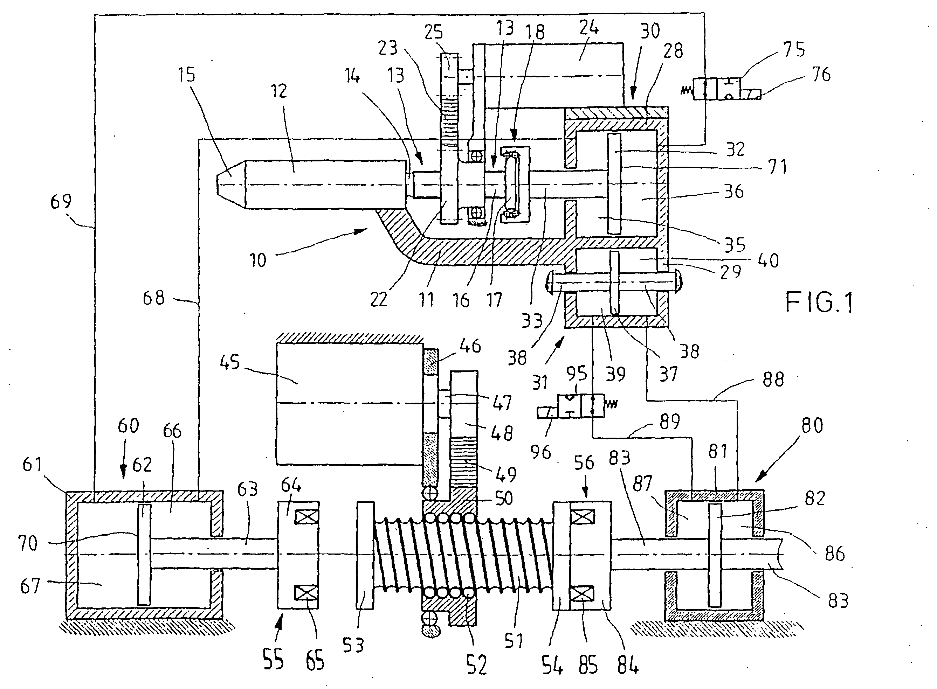

Gemäß Figur 1 besitzt eine in ihrer Gesamtheit nicht näher dargestellte Kunststoffspritzgießmaschine eine Einspritzeinheit 10 mit einem Gehäuse 11, an dem ein Plastifizierzylinder 12 angeordnet ist. An dem Gehäuse 11 ist drehbar und axial verschiebbar ein Einspritzmechanismus 13 gelagert, der eine Schnecke 14 umfaßt, die sich im wesentlichen innerhalb des Plastifizierzylinders 12 befindet. Ein einer nicht dargestellten Einspritzform zugewandtes, kegeliges Ende des Plastifizierzylinders 12 ist als Einspritzdüse 15 ausgebildet. Außerhalb des Plastifizierzylinders 12 schließt sich an die Schnecke 14, fest mit dieser verbunden, eine Keilwelle 16 an, die mit axial verlaufenden Keilen und Nuten versehen ist und an deren freiem Ende eine Scheibe 17 befestigt ist. Diese ist Teil eines Kugellagers 18.

Die Keilwelle 16 wird von einem Zahnrad 22 umgeben, das axial ortsfest an dem Gehäuse 11 drehbar gelagert ist und mit Keilen und Nuten an seinem Innendurchmesser in die Keile und Nuten der Keilwelle 16 eingreift. Das Zahnrad 22 ist über einen Zahnriemen 23 mit einem auf der Motorwelle eines Elektromotors 24 sitzenden Ritzel 25 gekoppelt. Von dem Elektromotor 24, der an dem Gehäuse 11 montiert ist, kann also der Einspritzmechanismus aus Schnecke und Keilwelle 16 drehend angetrieben werden. Dieser Antrieb dient dem Plastifizieren von Kunststoffgranulat und dem Fördern der plastifizierten Masse in den sich innerhalb des Plastifizierzylinders 12 befindlichen Raum zwischen dem Ende der Schnecke und der Düse 15.

Am Gehäuse 11 der Einspritzeinheit 10 sind der Zylinder 28 einer Kolben-Zylinder-Einheit 30 und der Zylinder 29 einer Kolben-Zylinder-Einheit 31 befestigt. Die Kolben-Zylinder-Einheit 30 fluchtet mit ihrer Achse mit der Achse der Schnekke 14 und der Keilwelle 16 und besitzt einen Differenzkolben 32 mit einer Kolbenstange 33, die an ihrem freien Ende eine Scheibe 34 mit einem die Scheibe 17 der Keilwelle 16 axial überragenden Kragen aufweist. Die Scheiben 17 und 34 sind Teile des Wälzlagers 18, das die Verdrehbarkeit der Keilwelle 16 retativ zur Kolbenstange 33 gewährleistet und das zwischen der Kolbenstange 33 und der Keilwelle 16 Axialkräfte nach beiden Richtungen übertragen kann. Der Differenzkolben 32 teilt das Innere des Zylinders 28 in einen kolbenstangenseitigen, ringförmigen Zylinderraum 35 und in einen kolbenstangenabseitigen, kreiszylindrischen Zylinderraum 36 auf.

Die Kolben-Zylinder-Einheit 31 besitzt einen Gleichgangkolben 37, der beidseits mit gleich dicken Kolbenstangen 38 versehen ist und somit das Innere des Zylinders 29 in zwei im Querschnitt gleiche, ringförmige Zylinderräume 39 und 40 aufteilt. Die beiden Kolbenstangen 38 sind in nicht näher dargestellter Weise am Maschinengestell befestigt. Der Kolben 37 bleibt also bezüglich des Maschinengestells 46 in Ruhe.

Antriebsquelle für die geradlinige Bewegung der Einspritzeinheit zum Anlegen der Düse 15 an die Form und zum Wegfahren der Düse von der Form sowie für die axiale Bewegung des Einspritzmechanismus 13 ist ein zweiter rotierender Elektromotor 45, der unterhalb der Einspritzeinheit in nicht näher dargestellter Weise am Maschinengestell 46 so befestigt ist, daß seine Achse parallel zur Achse des Einspritzmechanismus und damit parallel zur Richtung der geradlinigen Bewegungen der Einspritzeinheit und des Einspritzmechanismus verläuft. Auf der Motorwelle 47 sitzt verdrehsicher ein Ritzel 48, das über einen Zahnriemen 49 mit einer axial ortsfest am Maschinengestell 46 gelagerten und außen verzahnten Spindelmutter 50 gekoppelt ist. Die Spindelmutter 50 ist innen mit einem Kugelrollgewinde versehen. Durch sie geht eine Gewindespindel 51 hindurch, die mit einem als Kugelrollgewinde ausgebildeten Außengewinde versehen ist. Kugeln 52 greifen in das Innengewinde der Spindelmutter 50 und in das Außengewinde der Gewindespindel 51 ein, so daß diese beiden Teile über ein Schraubgelenk miteinander verbunden sind. Die Gewindespindel 51 ist in nicht näher dargestellter Weise geradlinig geführt, kann sich also nicht drehen, so daß sie sich bei Drehung der Spindelmutter 50 je nach Drehrichtung geradlinig in die eine oder in die entgegengesetzte Richtung bewegt. Der Elektromotor 45 kann nach zwei Richtungen drehen. An jedem Ende trägt die Gewindespindel 51 eine Scheibe 53 bzw. 54, die das Eingangselement einer elektromagnetisch betätigbaren Schaltkupplung 55 bzw. 56 darstellt.

Vor jeder Eingangskupplungsscheibe 53, 54 ist in Flucht zu der Gewindespindel 51 eine Kolben-Zylinder-Einheit 60 bzw. 80 angeordnet. Die Kolben-Zylinder-Einheit 60 hat in einem Zylindergehäuse 61 einen Differenzkolben 62 mit einer Kolbenstange 63, die in Richtung auf die Gewindespindel 51 zu aus dem Zylindergehäuse 61 herausragt. An ihrem äußeren Ende trägt die Kolbenstange 63 eine Scheibe 64, die das Ausgangselement der Schaltkupplung 55 darstellt und in sich eine elektrische Spule 65 aufnimmt und zusammen mit der Scheibe 53 an der Gewindespindel 51 die elektromagnetisch betätigbare Schaltkupplung 55 bildet. Der Differenzkolben 62 teilt das Innere des Zylindergehäuses 61 in einen kolbenstangenseitigen, ringförmigen Zylinderraum 66 und in einen kolbenstangenabseitigen, kreiszylindrischen Zylinderraum 67 auf. Der Zylinderraum 66 ist über eine hydraulische Leitung 68 dauernd mit dem Zylinderraum 35 der Kolben-Zylinder-Einheit 30 fluidisch verbunden. Vom Zylinderraum 67 führt eine hydraulische Leitung 69 zum Zylinderraum 36 der Kolben-Zylinder-Einheit 30. In dieser Leitung 69 befindet sich ein elektromagnetisch betätigbares 2/2-Wege-Sitzventil 75, dessen Ruhestellung die Durchgangsstellung ist und das durch den Elektromagneten 76 in eine Sperrstellung gebracht werden kann, in der es den Zylinderraum 36 leckagefrei zum Zylinderraum 67 absperrt. Gemäß Figur 1 ist die an den Zylinderraum 67 angrenzende Wirkfläche 70 des Hydraulikkolbens 62 genau so groß wie die an den Zylinderraum 36 angrenzende Wirkfläche 71 des Hydraulikkolbens 32. Ebenso sind die Querschnitte der Kolbenstangen 33 und 63 gleich groß, so daß auch die gegenüberliegenden Wirkflächen der Hydraulikkolben 62 und 32 und damit auch die Querschnitte der Zylinderräume 35 und 66 gleich groß sind. Demnach wird zwischen den beiden Kolben-Zylinder-Einheiten 60 und 30 keine Kraft übersetzt. Es kann jedoch ohne weiteres der Hydraulikkolben 62 kleiner als der Hydraulikkolben 32 gemacht werden, so daß die über die Kolbenstange 33 auf den Einspritzmechanismus 13 ausgeübte Kraft höher als die über die Kolbenstange 63 eingeleitete Kraft wird. Das gleiche Verhältnis, das zwischen den Querschnitten der Zylinderräume 67 und 36 besteht, haben dann auch die Querschnitte der Kolbenstangen 63 und 33 zueinander. Bei einer Kraftübersetzung zwischen den beiden Kolben-Zylinder-Einheiten 30 und 60 kann ein hoher Einspritzdruck aufgebracht werden, ohne daß der Gewindetrieb 50, 51 und der Zahnriemen 49 zu sehr belastet werden. Auch kann ein kleinerer Elektromotor 45 verwendet werden als bei einer Lösung ohne Kraftübersetzung.

Die Kolben-Zylinder-Einheit 80 vor der anderen Stirnseite der Gewindespindel 51 hat einen sich in einem Zylindergehäuse 81 befindlichen Gleichgangkolben 82, der beidseits jeweils eine Kolbenstange 83 aufweist. Die beiden Kolbenstangen haben gleichen Querschnitt und treten aus dem Zylindergehäuse 81 an gegenüberliegenden Stirnseiten aus. Die zur Gewindespindel 51 hin gerichtete Kolbenstange 83 trägt an ihrem Ende eine Scheibe 84, die in sich eine Spule 85 aufnimmt und die als Ausgangselement zusammen mit der Kupplungsscheibe 54 an der Gewindespindel 51 die zweite Schaltkupplung 56 bildet. Der Gleichgangkolben 82 teilt das Innere des Zylindergehäuses 81 in zwei im Querschnitt übereinstimmende Zylinderräume 86 und 87 auf. Der Zylinderraum 86 ist über eine hydraulische Leitung 88 dauernd mit dem Zylinderraum 40 der Kolben-Zylinder-Einheit 31 fluidisch verbunden. Vom Zylinderraum 87 der Kolben-Zylinder-Einheit 80 führt eine Leitung 89 zum Zylinderraum 39 der Kolben-Zylinder-Einheit 31. In dieser Leitung 89 befindet sich ein 2/2-Wege-Sitzventil 95, das in Ruhe seine Durchgangsstellung einnimmt und durch den Elektromagneten 96 in eine Sperrstellung gebracht werden kann, in der der Zylinderraum 39 zum Zylinderraum 87 abgesperrt ist.

Gemäß Figur 1 sind die Querschnitte der Zylinderräume 86 und 87 der Kolben-Zylinder-Einheit 80 größer als die Querschnitte der Zylinderräume 39 und 40 der Kolben-Zylinder-Einheit 31. Dies bedeutet, daß man eine Kraftuntersetzung und eine Wegübersetzung zwischen den beiden Kolben-Zylinder-Einheiten hat. Es genügt somit ein relativ kleiner Weg des Hydraulikkolbens 82 und damit der Gewindespindel 51, um die Einspritzdüse von ihrer Ruhestellung in Anlage an die Form und wieder zurück zu bringen.

In Figur 1 sei die Einspritzeinheit 10 in einem Zustand gezeigt, in den sich die Einspritzdüse 15 in einem Abstand von der Einspritzform befindet. Nach dem Plastifizieren einer entsprechenden Menge an Kunststoffmaterial befindet sich die Schnecke 14 und der gesamte Einspritzmechanismus sowie der Hydraulikkolben 32 mit der Kolbenstange 33 in einer zurückgezogenen Position. In der Teilfigur 2a sind schematisch die entsprechenden Positionen der Gewindespindel 51 sowie der Eingangskupplungsscheiben 53, 54 und der Ausgangskupplungsscheiben 64 und 84 der beiden Schaltkupplungen 55 und 56 gezeigt. Diese stimmen mit den Positionen aus Figur 1 überein.

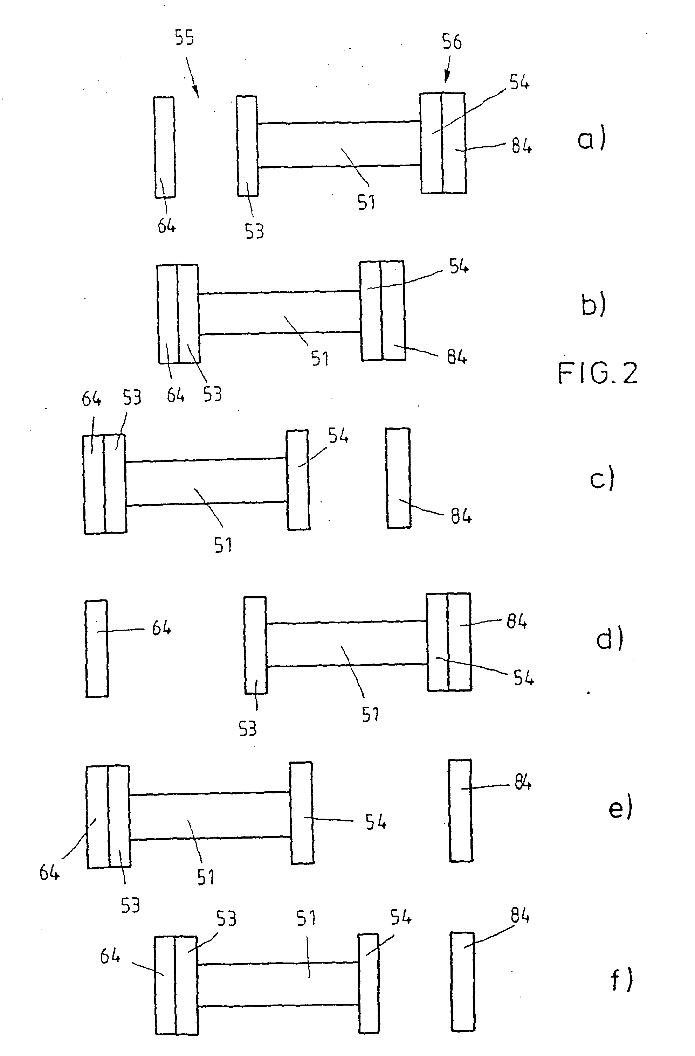

Zum Einspritzen von Kunststoff in die Form muß nun zunächst die Düse 15 an die Form herangefahren werden. Dazu wird der Elektromotor 45 in eine Drehrichtung angesteuert, daß sich die Gewindespindel 51 in der Ansicht nach den Figuren 1 und 2 nach links auf die Kupplungsscheibe 64 der Kupplung 55 zu bewegt. Die Schaltkupplung 56 ist betätigt, so daß die beiden Kupplungsscheiben 54 und 84 der Schaltkupplung 56 aneinander haften, der Hydraulikkolben 82 der Kolben-Zylinder-Einheit 80 also der Gewindespindel 51 folgt. Es wird Druckmittel aus dem Zylinderraum 87 über die Leitung 89 und das offene Sperrventil 95 in den Zylinderraum 39 der Kolben-Zylinder-Einheit 31 verdrängt. Dadurch bewegt sich die gesamte Einspritzeinheit 10 nach links. Nach dem zum Anlegen der Düse 15 an die Form notwendigen Weg der Gewindespindel 51 hat, wie in Figur 2b gezeigt, die Kupplungsscheibe 53 die Kupplungsscheibe 64 der anderen Schaltkupplung 55 erreicht. Nun wird zunächst das Sperrventil 95 in seine Sperrstellung gebracht und dann die Kupplung 56 unwirksam geschaltet. Aus dem Zylinderraum 39 der Kolben-Zylinder-Einheit 31 kann kein Druckmittel abfließen, so daß die Einspritzeinheit mit der Einspritzdüse 15 an der Form verbleibt. Der Elektromotor 45 dreht weiter in dieselbe Richtung, so daß sich die Gewindespindel 51 weiter nach links bewegt und im folgenden über die Kupplungsscheiben 53 und 64 die Kolbenstange 63 und den Hydraulikkolben 62 nach links verschiebt. Dadurch wird Druckmittel aus dem Zylinderraum 67 der Kolben-Zylinder-Einheit 60 über die Leitung 69 und das offene Wegeventil 75 in den Zylinderraum 36 der Kolben-Zylinder-Einheit 30 verdrängt. Der Hydraulikkolben 32 verschiebt den Einspritzmechanismus 13 nach links, so daß Kunststoffmaterial in die Form eingespritzt wird. Die Positionen der Gewindespindel 51 und der verschiedenen Kupplungsscheiben am Ende des Einspritzvorgangs sind in der Teilfigur 2c gezeigt. Während die Gewindespindel 51 über die Kupplungsscheibe 53 die Kupplungsscheibe 64 vor sich herschiebt, kann die Kupplung 55 auch wirksam geschaltet sein. Dann ist es möglich, die zu bewegende Komponente der Kunststoffspritzgießmaschine von der Antriebsquelle her auch abzubremsen.

Am Ende der Einspritzbewegung wird das Ventil 75 in seine Sperrstellung gebracht, so daß der Einspritzmechanismus 13 in seiner vordersten Position verbleibt. Der Elektromotor 45 wird in die umgekehrte Drehrichtung angesteuert und dadurch die Gewindespindel 51 nach rechts verfahren. Die Kupplung 55 ist unwirksam. Wenn die Gewindespindel 51 den zum Einspritzen zurückgelegten Weg in die umgekehrte Richtung überfahren hat, stößt sie mit der Kupplungsscheibe 54 auf die Kupplungsscheibe 84 der Schaltkupplung 56. Kurz vorher wird das Sperrventil 95 wieder in seine Durchgangsstellung gebracht. Nun kann der Hydraulikkolben 82 nach rechts verschoben werden, wobei Druckmittel aus dem Zylinderraum 86 in den Zylinderraum 40 und aus dem Zylinderraum 39 in den Zylinderraum 87 verdrängt wird. Die Einspritzeinheit 10 wird von der Einspritzform wegbewegt. Die Endstellung der Gewindespindel 51 und der verschiedenen Kupplungsscheiben ist in der Teilfigur 2d gezeigt. Dann wird das Sperrventil 95 wieder in seine Sperrstellung gebracht, so daß die Einspritzeinheit 10 in ihrer Position blokkiert ist. Die Schaltkupplung 56 wird gelöst. Der Elektromotor 45 wird wieder in ersterer Drehrichtung angesteuert, so daß die Gewindespindel 51 nach links an die Kupplungsscheibe 64 der Schaltkupplung 55 heranfährt, wie dies in der Teilfigur 2e gezeigt ist.

Nun soll Kunststoffmaterial plastifiziert und dabei vor der Schnecke 14 ein gewisser Staudruck aufrechterhalten werden. Zum Plastifizieren wird der Elektromotor 24 eingeschaltet, der den Einspritzmechanismus 13 mitsamt Schnecke 14 in eine solche Richtung dreht, daß Kunststoffmaterial vor die Schnecke gefördert wird. Dort baut sich ein gewisser Druck auf, der den Einspritzmechanismus 13 mitsamt dem Hydraulikkolben 32 nach hinten im Sinne einer Verkleinerung des Zylinderraums 36 der Kolben-Zylinder-Einheit 30 verschieben will. Bei in Durchgangsstellung befindlichem Sperrventil 75 kann nun durch die von dem Elektromotor 45 gesteuerte Geschwindigkeit, mit der sich die Gewindespindel 51 nach rechts bewegt und dadurch ein Verdrängen von Druckmittel aus dem Zylinderraum 36 der Kolben-Zylinder-Einheit 30 über das Ventil 75 und die Leitung 69 in den Zylinderraum 67 der Kolben-Zylinder-Einheit 60 zuläßt, ein bestimmter Staudruck eingestellt oder ein bestimmtes Staudruckprofil abgefahren werden. Ein bestimmter Zustand der Gewindespindel 51 und der Kupplungsscheiben der Kupplungen 55 und 56 während des Plastifiziervorganges ist in der Teilfigur 2f gezeigt. Am Ende des Plastifiziervorganges hat die Kupplungsscheibe 64 wieder die in der Teilfigur 2a gezeigte Position erreicht. Die Gewindespindel 51 wird weiter nach rechts an die Kupplungsscheibe 84 der Schaltkupplung 56 herangefahren.

Bei einem anderen nicht gezeigten Ausführungsbeispiel mit einem rotierenden Elektromotor 45 können die Gewindespindel 51, die Spindelmutter 50 und der Zahnriemen 49 durch eine Zahnstange ersetzt werden, die direkt mit dem Ritzel 48 kämmt.

Desweiteren wird man bei einem Ausführungsbeispiel mit einem elektrischen Linearmotor dessen Achse in Flucht mit den Kolbenstangen 63 und 83 legen und an den beiden Enden mit dem Eingangselement der Kupplung 55 bzw. der Kupplung 56 versehen.

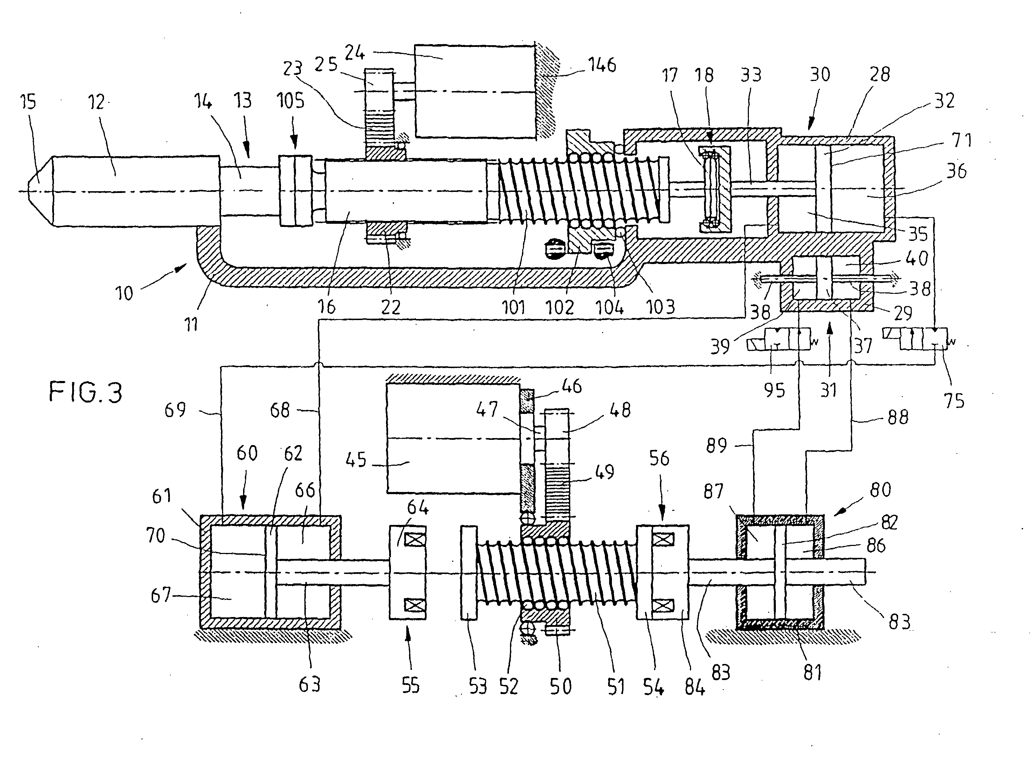

Das Ausführungsbeispiel nach Figur 3 unterscheidet sich von demjenigen nach Figur 1 im wesentlichen dadurch, daß der Elektromotor 24 nicht nur zum Drehen der Schnecke 14, sondern auch dazu verwendet wird, um zusammen mit dem Elektromotor 45 die Schnecke zum Einspritzen von Kunststoff in die Form axial zu verschieben. Dazu ist ein zweiter Gewindetrieb mit einer Gewindespindel 101 und mit einer Spindelmutter 102 als Triebelemente vorhanden. Die Gewindespindel 101 ist zwischen die Keilwelle 16 und das Axialwälzlager 18 eingefügt. Die Spindelmutter 102 ist axial entgegen der Bewegungsrichtung der Schnecke 14 beim Einspritzen über ein Axiallager 103 an dem Gehäuse 11 abgestützt. Spindelmutter und Gewindespindel haben Kugelrollgewinde und greifen über Kugeln ineinander ein. Die Spindelmutter ist frei auf der Gewindespindel drehbar und kann durch eine Bremse 104 gegen eine Drehung relativ zu dem Gehäuse 11 blockiert werden.

Zum Plastifizieren dreht der Elektromotor 24 in die eine Richtung und zum Einspritzen in die entgegengesetzte Richtung. Damit beim Einspritzen die Schnecke nicht mitdreht, ist zwischen dieser und der Keilwelle 16 ein Freilauf 105 angeordnet.

Zum Plastifizieren von Kunststoff wird der Elektromotor 24 so angesteuert, daß er die Keilwelle in eine Richtung dreht, in der der Freilauf 105 die Drehung auf die Schnecke 14 überträgt. Der Einspritzmechanismus 13 mitsamt Schnecke 14 wird in eine solche Richtung gedreht, daß Kunststoffmaterial vor die Schnecke gefördert wird. Dort baut sich ein gewisser Druck auf, der den Einspritzmechanismus 13 mitsamt dem Hydraulikkolben 32 nach hinten im Sinne einer Verkleinerung des Zylinderraums 36 der Kolben-Zylinder-Einheit 30 verschieben will. Bei in Durchgangsstellung befindlichem Sperrventil 75 kann nun wie bei dem Ausführungsbeispiel nach Figur 1 durch die von dem Elektromotor 45 gesteuerte Geschwindigkeit der Gewindespindel 51 ein bestimmter Staudruck eingestellt oder ein bestimmtes Staudruckprofil abgefahren werden. Die Spindelmutter 102 kann sich während des Plastifizierens unter axialer Abstützung über das Axiallager 103 frei drehen und behindert nicht die Bewegung der Gewindespindel 101 und damit des Einspritzmechanismus 13 nach hinten.

Ist genügend Kunststoffmaterial plastifiziert, wird vor dem Einspritzen von Kunststoff in die Form zunächst die Düse 15 an die Form herangefahren werden. Dies geschieht wie bei dem Ausführungsbeispiel nach Figur 1 dadurch, daß sich der Elektromotor 45 in eine erste Drehrichtung dreht. Die gesamte Einspritzeinheit 10 bewegt sich nach links. Nach dem zum Anlegen der Düse 15 an die Form notwendigen Weg der Gewindespindel 51 hat die Kupplungsscheibe 53 die Kupplungsscheibe 64 der anderen Schaltkupplung 55 erreicht. Nun wird zunächst das Sperrventil 95 in seine Sperrstellung gebracht und dann die Kupplung 56 unwirksam geschaltet. Aus dem Zylinderraum 39 der Kolben-Zylinder-Einheit 31 kann kein Druckmittel abfließen, so daß die Einspritzeinheit mit der Einspritzdüse 15 an der Form verbleibt. Der Elektromotor 45 dreht weiter in dieselbe Richtung, so daß sich die Gewindespindel 51 weiter nach links bewegt und im folgenden über die Kupplungsscheiben 53 und 64 die Kolbenstange 63 und den Hydraulikkolben 62 nach links verschiebt. Dadurch wird Druckmittel aus dem Zylinderraum 67 der Kolben-Zylinder-Einheit 60 über die Leitung 69 und das offene Wegeventil 75 in den Zylinderraum 36 der Kolben-Zylinder-Einheit 30 verdrängt. Der Hydraulikkolben 32 übt auf den Einspritzmechansimus 13 eine Kraft nach vorne aus.

Zum Einspritzen von Kunststoff wird außer dem Elektromotor 45 auch der Elektromotor 24 angesteuert. Und zwar dreht der Elektromotor 24 in eine Richtung, daß der Freilauf 105 die Drehung der Keilwelle 16 nicht auf die Schnecke 14 überträgt. Die Bremse 104 blockiert die Spindelmutter 102 gegen Drehen, so daß sich die Gewindespindel mit einer durch die Drehzahl des Elektromotors 24 bestimmten Geschwindigkeit nach links bewegt. Dabei ist über den Gewindetrieb 101, 102 nur ein Teil der zum Verschieben notwendigen Kraft aufzubringen. Der größere Teil der Kraft wird von dem Hydrozylinder 30 ausgeübt, so daß der Gewindetrieb nicht übermäßig belastet wird. Andererseits können wegen der größeren Steifigkeit der mechanischen Kraftübertragung vom Elektromotor 24 über den Gewindetrieb 101, 102 auf die Schnecke die Sollgeschwindigkeit der Schnecke und der Einspritzdruck sehr genau eingehalten werden, indem der Elektromotor 24 in seiner Drehzahl oder in seinem Drehmoment verändert wird.

## Patentansprüche

1. Antriebsvorrichtung zum Verschieben zweier zumindest teilweise zeitlich nacheinander geradlinig bewegbarer Komponenten (10, 13) einer Kunststoffspritzgießmaschine, insbesondere zum Verschieben der Einspritzeinheit (10) für das Anlegen der Einspritzdüse (15) an eine Form und zum Verschieben des Einspritzmechanismus (13) zum Einspritzen von Kunststoff in die Form,
mit einem Elektromotor (45), von dem über eine erste Schaltkupplung (55) und einen eine Gewindespindel (51) und eine Spindelmutter (50) aufweisenden Gewindetrieb die eine bewegbare Komponente (13) und über eine zweite Schaltkupplung (56) die andere bewegbare Komponente (10) verschiebbar ist,
und mit einer Blockiervorrichtung (75, 95) zumindest für die eine bewegbare Komponente (10, 13),
**dadurch gekennzeichnet,**
**daß** der Gewindetrieb (50, 51) zwischen dem Elektromotor (45) und den beiden Schaltkupplungen (55, 56) angeordnet ist und das geradlinig verfahrbare Abtriebselement (51) des Gewindetriebes für das Verschieben der einen bewegbaren Komponente (10, 13) über den zum Verschieben der anderen bewegbaren Komponente (13, 10) notwendigen Weg hinaus verfahrbar ist.

2. Antriebsvorrichtung zum Verschieben zweier zumindest teilweise zeitlich nacheinander geradlinig bewegbarer Komponenten (10, 13) einer Kunststoffspritzgießmaschine, insbesondere zum Verschieben der Einspritzeinheit (10) für das Anlegen der Einspritzdüse (15) an eine Form und zum Verschieben des Einspritzmechanismus (13) zum Einspritzen von Kunststoff in die Form, mit einem Elektromotor (45), von dem über eine erste Schaltkupplung (55) die eine bewegbare Komponente (13) und über eine zweite Schaltkupplung (56) die andere bewegbare Komponente (10) verschiebbar ist,
und mit einer Blockiervorrichtung (75, 95) zumindest für die eine bewegbare Komponente (10, 13),
**dadurch gekennzeichnet,**
**daß** der Elektromotor ein elektrischer Linearmotor mit einem linear verfahrbaren Abtriebselement ist, dem die beiden Schaltkupplungen (55, 56) in den Kraftketten nachgeordnet sind, und daß das Abtriebselement für das Verschieben der einen bewegbaren Komponente (10, 13) über den zum Verschieben der anderen bewegbaren Komponente (13, 10) notwendigen Weg hinaus verfahrbar ist.

3. Antriebsvorrichtung nach Anspruch 1 oder 2, **dadurch gekennzeichnet, daß** von dem Abtriebselement (51) in einem ersten Verfahrbereich die erste Komponente (10) und in einem vom ersten Verfahrbereich völlig getrennten zweiten Verbereich die zweite Komponente (13) verschiebbar ist.

4. Antriebsvorrichtung nach einem vorhergehenden Anspruch, **dadurch gekennzeichnet, daß** in zumindest einer Kraftkette von dem Abtriebselement (51) zu einer verschiebbaren Komponente (10, 13) ein hydraulisches Getriebe (60, 30; 80, 31) mit einer ersten Kolben-Zylinder-Einheit (60, 80), die einen einen ersten Zylinderraum (67, 87; 66, 86) begrenzenden, ersten Hydraulikkolben (62, 82) aufweist, und mit einer in der Kraftkette näher an der verschiebbaren Komponente (10, 13) befindlichen zweiten Kolben-Zylinder-Einheit (30, 31) vorhanden ist, die einen einen zweiten Zylinderraum (36, 39; 35, 40) begrenzenden, zweiten Hydraulikkolben (32, 37) aufweist, wobei zwischen dem ersten Zylinderraum (67, 87; 66, 86) und dem zweiten Zylinderraum (36, 39; 35, 40) Druckmittel austauschbar ist.

5. Antriebsvorrichtung nach Anspruch 4, **dadurch gekennzeichnet, daß** die Kolben-Zylinder-Einheiten (30, 31, 60, 80) doppeltwirkend sind.

6. Antriebsvorrichtung nach Anspruch 4 oder 5, **dadurch gekennzeichnet, daß** der zweite Zylinderraum (36, 39) durch ein Sperrventil (75, 95) zum ersten Zylinderraum (67, 87) hin absperrbar ist.

7. Antriebsvorrichtung nach Anspruch 6, **dadurch gekennzeichnet, daß** das Absperrventil (75, 95) ein Sitzventil ist, durch das der zweite Zylinderraum (36, 39) leckagefrei absperrbar ist.

8. Antriebsvorrichtung nach einem der Ansprüche 4 bis 7, **dadurch gekennzeichnet, daß** ein zweiter Gewindetrieb (101, 102) mit zwei miteinander in Eingriff stehenden Triebelementen (101, 102) vorhanden ist, von denen das eine Triebelement (101) von einem zweiten Elektromotor (24) drehend antreibbar ist und von denen ein Triebelement (101) zwischen dem hydraulischen Getriebe (30, 60) und der verschiebbaren Komponente (13) angeordnet ist.

9. Antriebsvorrichtung nach Anspruch 8, **dadurch gekennzeichnet, daß** die verschiebbare Komponente die Plastifizierschnecke (14) eines Einspritzmechanismus ist und daß von dem zweiten Elektromotor (24) die Plastifizierschnecke (14) auch drehend antreibbar ist.

10. Antriebsvorrichtung nach einem vorhergehenden Anspruch, **dadurch gekennzeichnet, daß** jede Schaltkupplung (55, 56) elektromagnetisch betätigbar ist.

11. Antriebsvorrichtung nach einem vorhergehenden Anspruch, **dadurch gekennzeichnet, daß** eine Schaltkupplung (55, 56) eine Eingangskupplungsscheibe (53, 54) und eine dieser axial gegenüberliegende Ausgangskupplungsscheibe (64, 84) umfaßt, die in die eine Bewegungsrichtung nur bei betätigter Schaltkupplung (55, 56) von der Eingangskupplungsscheibe (53, 54) mitschleppbar ist und in die entgegengesetzte Richtung auch durch axiale Beaufschlagung von der Eingangskupplungsscheibe (53, 54) mitnehmbar ist.

## Claims

1. A drive device for displacing two linearly movable components (10, 13) of a plastics injection-moulding machine at least partly at successive times, in particular for displacing the injection unit (10) for bringing the injection nozzle (15) into contact with a mould and for displacing the injection mechanism (13) for injecting polymer into the mould,
with an electric motor (45), by which the one movable component (13) can be displaced by means of a first clutch (55) and a threaded drive having a threaded spindle (51) and a spindle nut (50) and the other movable component (10) can be displaced by means of a second clutch (56),
and with a blocking device (75, 95) at least for the one movable component (10, 13),
**characterized by the fact that**
the threaded drive (50, 51) is arranged between the electric motor (45) and the two clutches (55, 56) and, for displacing the one movable component (10, 13), the linearly movable drive output element (51) of the threaded drive can be moved beyond the displacement distance necessary for displacing the other movable component (13, 10).

2. A drive device for displacing two linearly movable components (10, 13) of a plastics injection-moulding machine at least partly at successive times, in particular for displacing the injection unit (10) for bringing the injection nozzle (15) into contact with a mould and for displacing the injection mechanism (13) for injecting polymer into the mould,
with an electric motor (45), by which the one movable component (13) can be displaced by means of a first clutch (55), and the other movable component (10) can be displaced by means of a second clutch (56),
and with a blocking device (75, 95) at least for the one movable component (10, 13),
**characterized by the fact that**
the electric motor is an electric linear motor with a linearly movable drive output element, arranged downstream of which in the force chains are the two clutches (55, 56), and that, for displacing the one movable component (10, 13), the drive output element can be moved beyond the displacement distance necessary for displacing the other movable component (13, 10).

3. A drive device according to claim 1 or 2, **characterized by** the fact that the first component (10) can be displaced by the output drive element (51) in a first travelling range and the second component (13) can be displaced by the output drive element (51) in a second travelling range, which is completely separate from the first travelling range.

4. A drive device according to any of the preceding claims, **characterized by** the fact that in at least one force chain from the drive output element (51) to a displaceable component (10, 13) there is a hydraulic gear mechanism (60, 30; 80, 31) with a first piston-cylinder unit (60, 80), which has a first hydraulic piston (62, 82), bounding a first cylinder chamber (67, 87; 66, 86), and with a second piston cylinder unit (30, 31), which is located closer to the displaceable component (10, 13) in the force chain and has a second hydraulic piston (32, 37), bounding a second cylinder chamber (36, 39; 35, 40), pressure medium being exchangeable between the first cylinder chamber (67, 87; 66, 86) and the second cylinder chamber (36, 39; 35, 40).

5. A drive device according to claim 4, **characterized by** the fact that the piston-cylinder units (30, 31, 60, 80) are double-acting.

6. A drive device according to claim 4 or 5, **characterized by** the fact that the second cylinder chamber (36, 39) can be shut off by a shut-off valve (75, 95) with respect to the first cylinder chamber (67, 87).

7. A drive device according to claim 6, **characterized by** the fact that the shut-off valve (75, 95) is a seat valve, by which the second cylinder chamber (36, 39) can be shut off in a leak-free manner.

8. A drive device according to any of claims 4 to 7, **characterized by** the fact that there is a second threaded drive (101, 102) with two drive elements (101, 102) in engagement with each other, of which the one drive element (101) can be driven in a rotating manner by a second electric motor (24) and of which one drive element (101) is arranged between the hydraulic gear mechanism (30, 60) and the displaceable component (13).

9. A drive device according to claim 8, **characterized by** the fact that the displaceable component is the plasticizing screw (14) of an injection mechanism and that the plasticizing screw (14) can also be driven in a rotating manner by the second electric motor (24).

10. A drive device according to any of the preceding claims, **characterized by** the fact that each clutch (55, 56) is electromagnetically operable.

11. A drive device according to any of the preceding claims, **characterized by** the fact that a clutch (55, 56) comprises an input clutch disk (53, 54) and an output clutch disk (64, 84) which lies axially opposite the latter, can be entrained by the input clutch disk (53, 54) in the one direction of movement only when the clutch (55, 56) is operated and can be entrained by the input clutch disk (53, 54) in the opposite direction also by axial impingement.

## Revendications

1. Un dispositif d'entraînement permettant de déplacer deux composants (10, 13) d'une machine à mouler le plastique par injection, lesquels au moins partiellement peuvent coulisser linéairement de façon consécutive, en particulier conçu pour faire coulisser l'unité (10) d'injection pour l'application du gicleur (15) d'injection contre un moule et pour faire coulisser le mécanisme (13) d'injection pour l'injection de matière plastique dans le moule,
doté d'un moteur (45) électrique, qui permet de faire coulisser l'un des composants (13) mobiles à l'aide d'un premier embrayage (55) et d'un entraînement fileté présentant une broche (51) filetée et un écrou (50) de broche et l'autre composant (10) mobile à l'aide d'un second embrayage (56),
et doté d'un dispositif (75, 95) de blocage pour au moins l'un des composants (10, 13) mobiles,
**caractérisé en ce que**
l'entraînement (50, 51) fileté est disposé entre le moteur (45) électrique et les deux embrayages (55, 56) et, pour faire coulisser l'un des composants (10, 13) mobiles, l'élément (51) d'entraînement à actionnement linéaire de l'entraînement fileté est susceptible d'être actionné au-delà de la distance de déplacement nécessaire pour faire coulisser l'autre composant (10, 13) mobile.

2. Un dispositif d'entraînement permettant de déplacer deux composants (10, 13) d'une machine à mouler le plastique par injection, lesquels au moins partiellement peuvent coulisser linéairement de façon consécutive, en particulier conçu pour faire coulisser l'unité (10) d'injection pour l'application du gicleur (15) d'injection contre un moule et pour faire coulisser le mécanisme (13) d'injection pour l'injection de matière plastique dans le moule,
doté d'un moteur (45) électrique, qui permet de faire coulisser l'un des composants (13) mobiles à l'aide d'un premier embrayage (55) et l'autre composant (10) mobile à l'aide d'un second embrayage (56),
et doté d'un dispositif (75, 95) de blocage pour au moins l'un des composants (10, 13) mobiles,
**caractérisé en ce que**
le moteur électrique est un moteur électrique linéaire doté d'un élément d'entraînement à actionnement linéaire, prépondérant par rapport aux deux embrayages (55, 56) dans les chaînes de forces, et que l'élément d'entraînement permettant de faire coulisser l'un des composants (10, 13) mobiles peut être actionné au-delà de la distance de déplacement nécessaire pour faire coulisser l'autre composant (10, 13) mobile.

3. Un dispositif d'entraînement selon la revendication n° 1 ou n° 2,
**caractérisé en ce que** l'élément (51) d'entraînement peut actionner le premier composant (10) dans une première plage de déplacement et peut actionner le second composant (13) dans une seconde plage de déplacement, qui est totalement distincte de la première plage de déplacement.

4. Un dispositif d'entraînement selon une revendication précédente,
**caractérisé en ce que** dans au moins une chaîne de forces, qui va de l'élément (51) d'entraînement vers un composant (10, 13) pouvant coulisser, il y a une transmission (60, 30 ; 80, 31) hydraulique dotée d'une première unité (60, 80) piston vérin, qui présente un piston (62, 82) hydraulique délimitant une première chambre (67, 87 ; 66, 86) de vérin, et dotée d'une seconde unité (30, 31) piston vérin, qui est disposée plus près des composant (10, 13) pouvant coulisser dans la chaîne de forces et qui présente un second piston (32, 37) hydraulique délimitant une seconde chambre (36, 39 ; 35, 40) de vérin, cependant qu'un échange de fluide de pression peut avoir lieu entre la première chambre (67, 87 ; 66, 86) de vérin et la seconde chambre (36, 39 ; 35, 40) de vérin.

5. Un dispositif d'entraînement selon la revendication n° 4, **caractérisé en ce que** les unités (30, 31, 60, 80) piston vérin sont à double effet.

6. Un dispositif d'entraînement selon la revendication n° 4 ou n° 5,
**caractérisé en ce qu'**une valve d'isolation (75, 95) peut isoler la seconde chambre (36, 39) de vérin par rapport à la première chambre (67, 87) de vérin.

7. Un dispositif d'entraînement selon la revendication n° 6, **caractérisé en ce que** la valve d'isolation (75, 95), qui permet d'isoler la seconde chambre (36, 39) de vérin sans fuite, est une valve à siège de clapet.

8. Un dispositif d'entraînement selon une des revendications n° 4 à n° 7,
**caractérisé en ce qu'**il y a un second entraînement (101, 102) fileté doté de deux éléments (101, 102) d'entraînement en prise l'un avec l'autre, desquels l'un des éléments (101) d'entraînement peut être entraîné en rotation par un second moteur (24) électrique et desquels un élément (101) d'entraînement est disposé entre la transmission (30, 60) hydraulique et le composant (13) pouvant coulisser.

9. Un dispositif d'entraînement selon la revendication n° 8, **caractérisé en ce que** le composant pouvant coulisser est la préplastificatrice (14) d'un mécanisme d'injection et que la préplastificatrice (14) peut également être entraînée en rotation par le second moteur (24) électrique.

10. Un dispositif d'entraînement selon une revendication précédente,
**caractérisé en ce que** chaque embrayage (55, 56) peut être actionné par voie électromagnétique.

11. Un dispositif d'entraînement selon une revendication précédente,
**caractérisé en ce qu'**un embrayage (55, 56) comprend un disque (53, 54) d'embrayage d'entrée et un disque (64, 84) d'embrayage de sortie, qui est disposé en face du premier dans la direction axiale, qui pour l'un des sens de mouvement ne peut être entraîné par le disque (53, 54) d'embrayage d'entrée que lorsque l'embrayage (55, 56) est actionné et qui pour le sens opposé également peut être emmené par le disque (53, 54) d'embrayage d'entrée par sollicitation axiale.
